# EUROPÄISCHE PATENTANMELDUNG

(11) **EP 1 398 281 A1**
(43) Veröffentlichungstag der Anmeldung: **17.03.2004**
(21) Anmeldenummer: 03016328.1
(22) Anmeldetag: 18.07.2003
(51) Int. Cl.: B65G 7/12

(54) **Plattentragegerät**

(30) Priorität: 24.07.2002 DE 20211167 U
(71) Anmelder: Heindl, Martin, 83349 Palling (DE)
(72) Erfinder: Heindl, Martin, 83349 Palling (DE)
(74) Vertreter: Seidel, Herta, Dipl.-Phys.

(57) **Zusammenfassung**

Ein Plattentragegerät umfasst einen Querträger (1) mit zwei oder mehreren in Abständen voneinander längs des Querträgers angeordneten Auflagebügeln (6), für die zu transportierenden Platten, einen in der Mitte seiner Länge angeordneten Traggriff (4) und einen an den beiden Endbereichen des Querträgers befestigten Schultergurt (5), dessen Länge die Länge des Querträgers übersteigt.

## Beschreibung

Ein Transport von vertikal ausgerichteten Platten von Hand bereitet gewisse Schwierigkeiten, wenn die Größe der Platten ein Verdrehen des Körpers der tragenden Person bedingt, um mit der einen Hand die Unterkante der Platten und mit der anderen Hand die Oberkante der Platten zu halten. Sind in dieser Stellung größere Strecken mit der oder den Platten zurückzulegen, dann ergeben sich erfahrungsgemäß Rückenprobleme des Trägers infolge der durch die Tragestellung bedingten Verdrehung der Wirbelsäule.

Der Erfinder hat sich daher die Aufgabe gestellt, dieses Problem zu lösen und eine Vorrichtung zu schaffen, mit der auch größere Platten in aufrechter Haltung über längere Strecken getragen werden können.

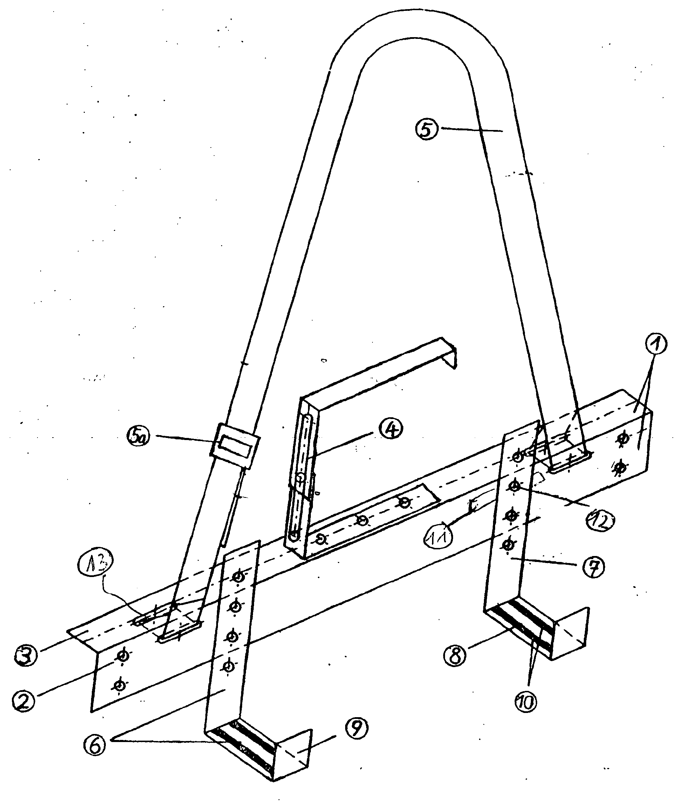

Dies wird nach der Erfindung durch einen Querträger mit zwei oder mehreren in Abständen voneinander längs des Querträgers angeordneten Auflagebügeln für die zu transportierenden Platten, mit einem in der Mitte seiner Länge angeordneten Traggriff und einem an den beiden Endbereichen des Querträgers befestigten Schultergurt, dessen Länge die Länge des Querträgers übersteigt, erreicht.
Vorzugsweise Ausbildungen der erfindungsgemäßen Vorrichtung ergeben sich aus den Unteransprüchen.
Nachstehend wird eine Ausbildung des erfindungsgemäßen Plattentragegerätes anhand der Zeichnung beschrieben.

In der Zeichnung ist das erfindungsgemäße Plattentragegerät in perspektivischer Darstellung wiedergegeben. Ein Querträger 1, z.B. aus Aluminium, hat im bevorzugten Ausführungsbeispiel eine Länge von ca. 100 cm. Der Querschnitt des Querträgers 1 ist L-förmig. Der nach unten gerichtete Schenkel 2 des Querträgers 1 ist etwa 4 cm lang, die Länge des rechtwinkligen horizontal verlaufenden Schenkels 3 des Querträgers 1 beträgt ca. 2 cm.
Ein Tragegriff 4 ist in der Mitte des horizontal verlaufenden Schenkels 3 befestigt. Höhe und Breite des Tragegriffs 4 können veränderbar sein.
In beiden Endbereichen des Schenkels 3 ist ein Schultergurt 5 befestigt. Die Länge des Schultergurtes 5 ist verstellbar bei 5a, um der Größe des Trägers so angepaßt zu werden, daß ein aufrechter Gang beim Tragen der Platten ermöglicht ist.
In den beiden Endbereichen des Schenkels 2 ist je ein Auflagebügel 6 vorgesehen. Entsprechend dem Verwendungszweck können auch mehrere Auflagebügel 6 angeordnet sein.
Die beiden Auflagebügel 6 sind L-förmig. Ihr langer Schenkel 7 ist im Ausführungsbeispiel ca. 10 cm. Die Länge des kurzen Schenkels 8 bestimmt sich aus der Vielzahl und der Stärke der zu transportierenden Platten. Seine Länge kann vorzugsweise verstellbar ausgebildet sein. An seinem freien Ende ist der Schenkel 8 parallel zum Schenkel 7 nach oben abgebogen, um eine Abrutschsicherung 9 für die zu transportierenden Platten zu bilden. Es kann aber auch eine Abrutschsicherung 10 (nicht dargestellt) abnehmbar auf das freie Ende des Schenkels 8 aufgeschoben werden.

Die Auflagebügel 6 können mit dem Querträger 1 verschweißt oder verschraubt sein.

Bei einer bevorzugten Ausbildung ist der Abstand der Auflagebügel 6 verstellbar. Hierzu ist, wie in der Fig. bei dem einen Auflagebügel 6 angedeutet, im Querträger 1 ein Schlitz 11 vorgesehen, in dem die Befestigungsschraube 12 des Auflagebügels verschiebbar ist.

Um ein Kippen des Plattentragegeräts zu verhindern, sind die beiden Enden des Schultergurtes 5 am Schenkel 2 des Querträgers l angebracht, um die Verbindungskante der beiden Schenkel 2 und 3 herumgeführt und durch eine auf dem Schenkel 3 befestigte Öse 13 hindurchgeführt.

Bei 5a erkennt man die für die Längenveränderung des Gurtes 5 erforderliche Schnalle 5a.

## Patentansprüche

1. Plattentragegerät, gekenzeichnet durch einen Querträger (1) mit zwei oder mehreren in Abständen voneinander längs des Querträgers angeordneten Auflagebügeln (6) für die zu transportierenden Platten, mit einem in der Mitte seiner Länge angeordneten Traggriff(4) und einem an den beiden Endbereichen des Querträgers befestigten Schultergurt (5), dessen Länge die Länge des Querträgers übersteigt.

2. Plattentragegerät nach Anspruch 1, **dadurch gekennzeichnet, daß** die Länge des Schultergurtes (5) veränderbar ist.

3. Plattentragegerät nach einem der Ansprüche 1 oder 2, **dadurch gekennzeichnet, daß** der Querschnitt des Querträgers (1) eine L-Form aufweist.

4. Plattentragegerät nach Anspruch 3, **dadurch gekennzeichnet, daß** die Auflagebügel (6) an dem einen Schenkel (2) des Querträgers (1) und der Tragegriff (4) am anderen Schenkel (3) des Querträgers angeordnet sind.

5. Plattentragegerät nach einem der vorhergehenden Ansprüche, **dadurch gekennzeichnet, daß** die Auflagebügel (6) L-förmig ausgebildet sind.

6. Plattentragegerät nach Anspruch 5, **dadurch gekennzeichnet, daß** der eine Schenkel (7) des Auflagebügels mit dem Querträger verbunden ist.

7. Plattentragegerät nach einem der vorhergehenden Ansprüche, **dadurch gekennzeichnet, daß** am freien Ende des 2. Schenkels (8) des Auflagebügels eine Abrutschsicherung (9,10) angeordnet ist.

8. Plattentragegerät nach einem der vorhergehenden Ansprüche, **dadurch gekennzeichnet, daß** der 2, Schenkel (8) an seinem freien Ende parallel zum ersten Schenkel (7) nach oben aufgebogen ist.

9. Plattentragegerät, **dadurch gekennzeichnet, daß** der Abstand der Auflagebügel in Abhängigkeit von den Maßen der zu transportierenden Platten einstellbar ist.

10. Plattentragegerät , **dadurch gekennzeichnet, daß** für die Veränderung des Abstandes der Auflagebügel im Querträger parallel zu seiner Länge verlaufende Schlitze (11) vorgesehen sind, die ein Verschieben der Befestigungsschrauben (12) der Auflagebügel (6) ermöglichen.

11. Plattentragegerät, **dadurch gekennzeichnet, daß** der Schultergurt (5) am vertikal verlaufenden Schenkel (2) de Querträgers (1) befestigt und durch eine Öse (12) am horizontal verlaufenden Schenkel (3) geführt ist.

12. Plattentragegerät, **dadurch gekennzeichnet, dass** die Höhe und/oder Breite des Tragegriffs (4) veränderbar sind.
